# EUROPÄISCHE PATENTSCHRIFT

(11) **EP 2 265 902 B1**
(45) Veröffentlichungstag und Bekanntmachung des Hinweises auf die Patenterteilung: **07.05.2014**
(21) Anmeldenummer: 09730838.1
(22) Anmeldetag: 24.03.2009
(51) Int. Cl.: G01D 5/20

(54) **INDUKTIVER DREHWINKELSENSOR UND VERFAHREN ZUM BETRIEB EINES INDUKTIVEN DREHWINKELSENSORS**
INDUCTIVE ROTATIONAL ANGLE SENSOR AND METHOD FOR OPERATING AN INDUCTIVE ROTATIONAL ANGLE SENSOR
DÉTECTEUR D'ANGLE DE ROTATION INDUCTIF ET PROCÉDÉ D'EXPLOITATION D'UN DÉTECTEUR D'ANGLE DE ROTATION INDUCTIF

(30) Priorität: 09.04.2008 DE 102008017857
(43) Veröffentlichungstag der Anmeldung: 29.12.2010
(73) Patentinhaber: Dr. Johannes Heidenhain GmbH, 83301 Traunreut (DE)
(72) Erfinder: TIEMANN, Marc Oliver, A-5020 Salzburg (AT); SILMBROTH, Eva, 83064 Raubling (DE)
(86) Internationale Anmeldenummer: PCT/EP2009/053427
(87) Internationale Veröffentlichungsnummer: WO 2009/124836

(56) Entgegenhaltungen:
- EP-A- 0 845 659
- EP-A- 1 906 153

## Beschreibung

Die Erfindung betrifft einen induktiven Drehwinkelsensor zur Bestimmung von Relativwinkelpositionen gemäß dem Oberbegriff des Anspruchs 1 und ein Verfahren zum Betrieb eines induktiven Drehwinkelsensors gemäß dem Anspruch 8.

Induktive Drehwinkelsensoren werden beispielsweise in Drehgebern zur Bestimmung der Winkellage zweier relativ zueinander drehbaren Maschinenteile verwendet. Bei induktiven Drehwinkelsensoren werden Erregerspulen und Empfängerspulen etwa in Form von Leiterbahnen auf einer gemeinsamen Leiterplatte aufgebracht, die beispielsweise mit einem Stator eines Drehgebers fest verbunden ist. Dieser Leiterplatte gegenüber befindet sich eine weitere Platine, die nicht selten als Teilscheibe ausgebildet ist, auf der in periodischen Abständen alternierend elektrisch leitfähige und nichtleitfähige Flächen als Teilungsbereich bzw. Teilungsstruktur aufgebracht sind, und welche mit dem Rotor des Drehgebers drehfest verbunden ist. Wenn an den Erregerspulen ein zeitlich wechselndes elektrisches Erregerfeld angelegt wird, werden in den Empfängerspulen von der relativen Winkellage zwischen Rotor und Stator abhängige Signale erzeugt.

Häufig werden Drehgeber mit induktiven Drehwinkelsensoren als Messgeräte für elektrische Antriebe, zur Bestimmung der absoluten Winkellage von entsprechenden Antriebswellen, eingesetzt.

In der DE 197 51 853 A1 der Anmelderin wird ein Aufbau für einen induktiven Drehwinkelsensor beschrieben, bei dem zwei Teilungsspuren einer Teilscheibe, bzw. eines Teilungselements durch Empfängerspulen auf einer Leiterplatte abgetastet werden. Zur Vermeidung der Erzeugung fehlerbehafteter Signale müssen derartige Drehwinkelsensoren mit vergleichsweise geringen Fertigungstoleranzen bereitgestellt werden, insbesondere wenn die Empfängerspulen einen vergleichsweise großen Außendurchmesser aufweisen.

Unter Fertigungstoleranzen sind im Folgenden insbesondere auch Anbautoleranzen, die bei der Montage des Drehwinkelsensors an eine zu messende Welle entstehen, zu verstehen. Derartige Anbautoleranzen oder Anbauungenauigkeiten können beispielsweise Taumelbewegungen des Rotors oder Schiefstellungen des Rotors und / oder des Stators bewirken.

Der Erfindung liegt daher die Aufgabe zugrunde, einen kostengünstigen induktiven Drehwinkelsensor und ein Verfahren zum Berieb eines derartigen Drehwinkelsensors zu schaffen, durch welchen / welches eine hohe Signalgüte bzw. überaus genaue Messergebnisse erreichbar ist.

Diese Aufgabe wird erfindungsgemäß durch die Merkmale des Anspruches 1 bzw. des Anspruches 8 gelöst.

Demnach umfasst der induktive Drehwinkelsensor, eine Leiterplatte, auf der eine Erregerleiterbahn und eine erste, zweite sowie eine dritte Empfängerleiterbahn aufgebracht sind. Weiterhin umfasst der Drehwinkelsensor ein Teilungselement, welches relativ zur Leiterplatte drehbar ist und eine erste sowie eine zweite Teilungsspur umfasst, die insbesondere jeweils aus alternierend angeordneten, elektrisch leitfähigen und nichtleitfähigen Teilungsbereichen bestehen. Die erste und zweite Teilungsspur und die erste und zweite Empfängerleiterbahn sind so ausgestaltet, dass innerhalb einer Umdrehung des Teilungselements relativ zur Leiterplatte durch die erste Empfängerleiterbahn Signale mit einer ersten Periodenanzahl und durch die zweite Empfängerleiterbahn Signale mit einer zweiten Periodenanzahl erzeugbar sind. Dabei weist das Teilungselement eine dritte Teilungsspur auf, die ebenso aus alternierend angeordneten, elektrisch leitfähigen und nichtleitfähigen Teilungsbereichen bestehen kann, wobei die dritte Teilungsspur sowie die dritte Empfängerleiterbahn so ausgestaltet sind, dass innerhalb einer Umdrehung des Teilungselements relativ zur Leiterplatte durch die dritte Empfängerleiterbahn Signale mit der ersten Periodenanzahl erzeugbar sind. Eine derartige Anordnung eines Drehwinkelsensors ist insbesondere dazu geeignet Messfehler, bedingt durch Taumelbewegungen oder Schiefstellung des Teilungselements relativ zur Leiterplatte, zu reduzieren. Ebenso kann der Einfluss einer Schiefstellung des Stators verringert werden.

Der Abstand der ersten Teilungsspur zur Drehachse unterscheidet sich vom Abstand der dritten Teilungsspur zur Drehachse. Insbesondere weist die erste Teilungsspur einen Krümmungsradius auf, der unterschiedlich ist vom Krümmungsradius der dritten Teilungsspur.

Die innerste Teilungsspur ist in einem Bereich aufgebracht, welcher zur Drehasche hin durch einen kleineren Radius r begrenzt ist. Dagegen liegt die äußerste Teilungsspur innerhalb eines größeren Radius R, wobei beide Radien r, R ihren Ursprung in der Drehachse haben. Besonders vorteilhaft ist die Erfindung in Verbindung mit ringförmigen Teilscheiben die eine vergleichsweise große innere Bohrung aufweisen. Bei dieser Vorgabe ist häufig der kleinere Radius r vergleichsweise groß. Insbesondere ist daher die Erfindung vorteilhaft verwendbar, wenn das Verhältnis des größeren Radius R zum kleineren Radius r kleiner ist als 3/2 (R/r < 3/2). Mit Vorteil kann R/r < 4/3, insbesondere R/r < 5/4 betragen. Bei diesen Anordnungen mit relativ großem kleinerem Radius r wirken sich nämlich durch Fertigungs- bzw. Anbautoleranzen unvermeidliche Taumelbewegungen oder Schiefstellungen zwischen Teilscheibe und Leiterplatte im Hinblick auf die Qualität des Messergebnisses besonders ungünstig aus. Durch die Erfindung werden diese Einbußen der Qualität des Messergebnisses signifikant reduziert.

Mit Vorteil umfasst der Drehwinkelsensor, insbesondere die Leiterplatte, ein Mittel, durch welches die Signale der dritten Empfängerleiterbahn mit den Signalen der ersten Empfängerleiterbahn zu einem Gesamtsignal kombinierbar sind, wobei aus dem Gesamtsignal eine relative Winkellage zwischen Leiterplatte und Teilungselement fehlerreduziert, bezüglich Fertigungs- und Anbautoleranzen, bestimmbar ist. Das Mittel kann beispielsweise als eine elektronische Schaltung ausgestaltet sein und insbesondere als eine analoge elektronische Schaltung ausgeführt sein. In vorteilhafter Weise ist das Mittel ein Additions- oder Subtraktionsmittel, bzw. eine Additions- oder Subtraktionsschaltung. In einfachster Ausgestaltung kann die Schaltung lediglich eine serielle oder eine parallele Zusammenschaltung der ersten mit der dritten Empfängerleiterbahn bedeuten.

Im Folgenden ist unter dem Begriff Periodenanzahl diejenige Anzahl von Signalperioden zu verstehen, die innerhalb einer Umdrehung des Teilungselements bzw. der Teilscheibe relativ zur Leiterplatte durch eine Empfängerleiterbahn erzeugt werden.

In einer bevorzugten Ausgestaltung der Erfindung ist die erste Periodenanzahl kleiner als die zweite Periodenanzahl, insbesondere kann die erste Periodenanzahl den Wert eins annehmen.

In weiterer Ausgestaltung der Erfindung ist mit Vorteil die erste Periodenanzahl ungeradzahlig und die zweite Periodenanzahl geradzahlig.

Die Signale, die von der ersten Empfängerleiterbahn erzeugbar sind, können gegenüber den Signalen, die von der dritten Empfängerleiterbahn erzeugbar sind einen Phasenversatz von 360°/(2·n1) aufweisen, wobei n1 den Wert der ersten Periodenanzahl der Signale der ersten und dritten Empfängerleiterbahn darstellt.

Mit Vorteil weist die Leiterplatte eine erste Empfängerspur und eine dritte Empfängerspur auf, wobei die erste Empfängerspur zwei erste Empfängerleiterbahnen und die dritte Empfängerspur zwei dritte Empfängerleiterbahnen umfasst.

Weiterhin umfasst die Erfindung ein Verfahren zum Betrieb eines Drehwinkelsensors, wobei der Drehwinkelsensor eine Leiterplatte aufweist, auf der eine Erregerleiterbahn und eine erste, zweite sowie dritte Empfängerleiterbahn aufgebracht sind. Weiterhin weist der Drehwinkelsensor ein Teilungselement auf, welches relativ zur Leiterplatte im Betrieb gedreht wird und eine erste, zweite und eine dritte Teilungsspur umfasst, wobei die Teilungsspuren insbesondere jeweils aus alternierend angeordneten, elektrisch leitfähigen und nichtleitfähigen Teilungsbereichen bestehen. Die erste, zweite und dritte Teilungsspur und die erste, zweite und dritte Empfängerleiterbahn sind so ausgestaltet, dass innerhalb einer Umdrehung des Teilungselements relativ zur Leiterplatte durch die erste und dritte Empfängerleiterbahn Signale mit einer ersten Periodenanzahl und die zweite Empfängerleiterbahn Signale mit einer zweiten Periodenanzahl erzeugt werden. Die Signale mit der ersten Periodenanzahl werden zu einem Gesamtsignal kombiniert und aus dem Gesamtsignal wird die relative Winkellage zwischen der Leiterplatte und dem Teilungselement bestimmt bzw. eine Information über die relative Winkellage erzeugt.

Mit Vorteil werden die Signale mit der ersten Periodenanzahl zu einem Gesamtsignal unter Verwendung einer Additions- oder Subtraktionsoperation kombiniert.

Mit Vorteil weist die Leiterplatte eine erste Empfängerspur und eine dritte Empfängerspur auf, wobei die erste Empfängerspur zwei erste Empfängerleiterbahnen und die dritte Empfängerspur zwei dritte Empfängerleiterbahnen umfasst, so dass zwei Gesamtsignale erzeugbar sind. In weiterer Ausgestaltung der Erfindung weisen die zwei Gesamtsignale einen Phasenversatz von 90° auf. Alternativ hierzu kann der Drehwinkelsensor auch so ausgestaltet sein, dass mehr als zwei Gesamtsignale erzeugbar sind, beispielsweise drei, die dann jeweils einen Phasenversatz von 120° oder 60° zueinander aufweisen.

Vorteilhafte Ausbildungen der Erfindung entnimmt man den abhängigen Ansprüchen.

Weitere Einzelheiten und Vorteile des erfindungsgemäßen induktiven Drehwinkelsensors, sowie des Verfahrens zum Betrieb eines derartigen Drehwinkelsensors ergeben sich aus der nachfolgenden Beschreibung mehrerer Ausführungsbeispiele anhand der beiliegenden Figuren.

Es zeigen die
- Figur 1: eine Draufsicht auf eine Teilscheibe, gemäß einem ersten Ausführungsbeispiel,
- Figur 2: eine Draufsicht auf eine Leiterplatte, gemäß dem ersten Ausführungsbeispiel,
- Figur 3: eine Draufsicht auf eine Teilscheibe, gemäß einem zweiten Ausführungsbeispiel,
- Figur 4: eine Draufsicht auf eine Leiterplatte, gemäß dem zweiten Ausführungsbeispiel,
- Figur 5: eine Draufsicht auf eine Teilscheibe, gemäß einem dritten Ausführungsbeispiel,
- Figur 6: eine Draufsicht auf eine Teilscheibe, gemäß einem vierten Ausführungsbeispiel,
- Figur 7a: einen Verlauf der Signale, wie er von den Empfängerleiterbahnen der ersten Empfängerspur erzeugt wird,
- Figur 7b: einen Verlauf der Signale, wie er von den Empfängerleiterbahnen der dritten Empfängerspur erzeugt wird,
- Figur 7c: einen Verlauf der Gesamtsignale,
- Figur 8: eine Schnittdarstellung eines Drehgebers.

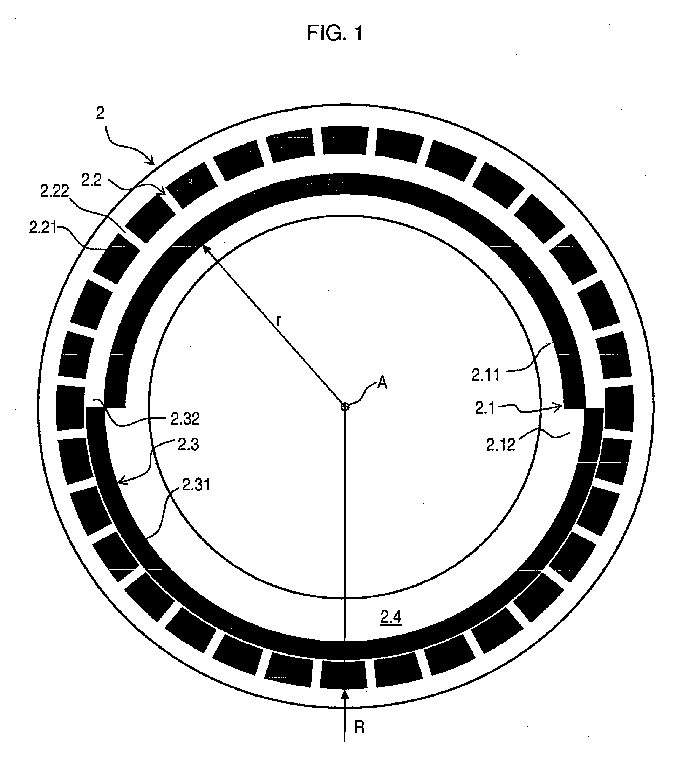

Die Figuren 1 - 6 zeigen insgesamt vier Ausführungsbeispiele eines erfindungsgemäßen Drehwinkelsensors.

In der Figur 1 ist ein Teilungselement in Form einer ringförmigen Teilscheibe 2 gemäß einem ersten Ausführungsbeispiel dargestellt. Die Teilscheibe 2 besteht aus einem Substrat 2.4, welches in den Ausführungsbeispielen aus Epoxydharz hergestellt ist, und auf welchem drei Teilungsspuren 2.1, 2.2, 2.3 angeordnet sind. Die Teilungsspuren 2.1, 2.2, 2.3 sind kreisförmig ausgebildet und bezüglich einer Drehachse A konzentrisch mit unterschiedlichen Durchmessern, bzw. radial versetzt zueinander, auf dem Substrat 2.4 angeordnet. Die Teilungsspuren 2.1, 2.2, 2.3 bestehen jeweils aus einer periodischen Abfolge von alternierend angeordneten elektrisch leitfähigen Teilungsbereichen 2.11, 2.21, 2.31 und nichtleitfähigen Teilungsbereichen 2.12, 2.22, 2.32. Als Material für die elektrisch leitfähigen Teilungsbereiche 2.11, 2.21, 2.31 wurde in allen gezeigten Beispielen Kupfer auf das Substrat 2.4 aufgebracht. In den nichtleitfähigen Teilungsbereichen 2.12, 2.22, 2.32 wurde das Substrat 2.4 dagegen nicht beschichtet.

Gemäß dem ersten Ausführungsbeispiel (Figur 1) bestehen die beiden inneren Teilungsspuren 2.1 und 2.3, bzw. die erste und die dritte Teilungsspur 2.1 und 2.3, in der dargestellten Ausführungsform jeweils aus einem ersten halbkreisförmigen Teilungsbereich 2.11, 2.31 mit elektrisch leitfähigem Material, hier Kupfer, sowie jeweils einem zweiten halbkreisförmigen Teilungsbereich 2.12, 2.32 in dem kein leitfähiges Material angeordnet ist. Die innerste Teilungsspur 2.1 ist in einem Bereich aufgebracht, welcher zur Drehasche A hin durch den Radius r begrenzt ist.

Radial außen benachbart zur dritten Teilungsspur 2.3 liegt die zweite Teilungsspur 2.2 auf dem Substrat 2.4, wobei auch die zweite Teilungsspur 2.2 aus einer Vielzahl elektrisch leitfähiger Teilungsbereiche 2.21 sowie dazwischen angeordneten nichtleitfähigen Teilungsbereichen 2.22 besteht. Die verschiedenen Teilungsbereiche 2.21, 2.22 sind materialmäßig dabei ebenso ausgebildet wie die Teilungsbereiche 2.11, 2.12 der ersten und dritten Teilungsspur 2.1, 2.3. Insgesamt umfasst die zweite Teilungsspur 2.2 in den dargestellten Ausführungsbeispielen zweiunddreißig periodisch angeordnete, elektrisch leitfähige Teilungsbereiche 2.21 sowie entsprechend zweiunddreißig dazwischen angeordnete nichtleitfähige Teilungsbereiche 2.22. Geometrisch liegt die zweite Teilungsspur 2.2 innerhalb des Radius R, wobei die Radius R seinen Ursprung in der Drehachse A hat.

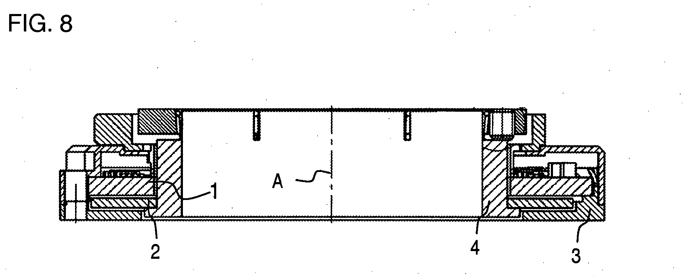

Die ringförmige Teilscheibe 2 bzw. das Substrat 2.4 weist eine vergleichsweise große innere Bohrung zur Aufnahme einer zu messenden Welle 4 (Figur 8) auf. Entsprechend ist das Verhältnis R/r relativ klein und beträgt hier etwa 1,34.

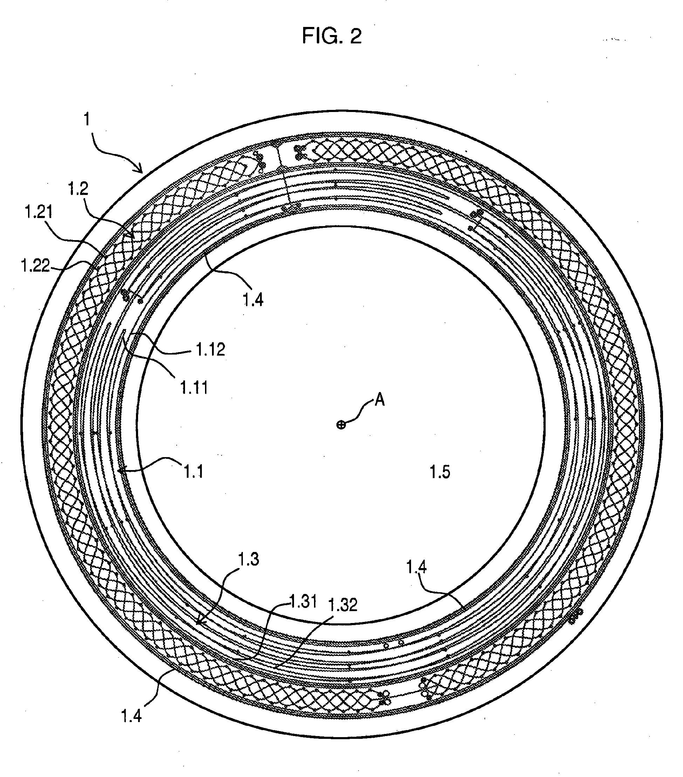

Die in Figur 2 gezeigte, zur Abtastung der Teilscheibe 2 gemäß Figur 1 vorgesehene Leiterplatte 1 umfasst als Empfängerspulen in einer innersten Empfängerspur 1.1 zwei Empfängerleiterbahnen 1.11, 1.12, in einer mittleren Empfängerspur 1.3 weitere zwei Empfängerleiterbahnen 1.31, 1.32 und in der äußersten Empfängerspur 1.2 ein zusätzliches Paar Empfängerleiterbahnen 1.21, 1.22. Die zusammengehörigen Paare der Empfängerleiterbahnen 1.11, 1.12; 1.21, 1.22; 1.31, 1.32 einer jeweiligen Empfängerspur 1.1, 1.2, 1.3 sind hierbei relativ zueinander versetzt angeordnet.

Darüber hinaus sind als Erregerspulen an der Leiterplatte 1 Erregerleiterbahnen 1.4 vorgesehen, welche auf einer inneren, einer mittleren und einer äußeren Erregerspur aufgebracht sind. Die Leiterplatte 1 selbst weist eine zentrische Bohrung 1.5 auf und ist als eine mehrlagige Leiterplatte ausgeführt.

Im zusammengebauten Zustand des Drehwinkelsensors stehen sich die Teilscheibe 2 und die Leiterplatte 1 gegenüber, so dass die Drehachse A durch die Mittelpunkte beider Elemente verläuft und bei einer Relativdrehung zwischen Teilscheibe 2 und Leiterplatte 1 in der Leiterplatte 1 ein von der jeweiligen Drehstellung abhängige Winkelinformation durch Induktionseffekte erzeugbar ist. Dabei ist es unvermeidlich, dass die Teilscheibe 2 relativ zur Leiterplatte 1 während der Drehbewegung auch Taumelbewegungen ausführt, die durch Fertigungs- bzw. Anbautoleranzen verursacht werden.

Vorraussetzung für die Bildung von entsprechenden Winkelinformationen ist, dass die Erregerleiterbahnen 1.4 ein zeitlich wechselndes elektromagnetisches Erregerfeld im Bereich der Empfängerspuren 1.1, 1.2, 1.3 bzw. im Bereich der damit abgetasteten Teilungsspuren 2.1, 2.2, 2.3 erzeugen. In den dargestellten Ausführungsbeispielen sind die Erregerleiterbahnen 1.4 als mehrere planar-parallele stromdurchflossene Einzel-Leiterbahnen ausgebildet. Werden die Erregerleiterbahnen 1.4 einer Leiterbahneinheit allesamt in der gleichen Richtung von Strom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt.

Die Stromrichtung der unmittelbar an eine gemeinsame Empfängerspur 1.1, 1.2, 1.3 angrenzenden Leiterbahneinheiten bzw. die entsprechende Verschaltung dieser Leiterbahneinheiten ist dabei entgegengesetzt zu wählen, so dass die Feldlinien im Bereich der Empfängerspuren 1.1, 1.2, 1.3 jeweils identisch orientiert sind. Die Versorgung der Erregerleiterbahnen 1.4 mit einer zeitlich wechselnden Versorgungsspannung erfolgt über Versorgungsspannungsabgriffe.

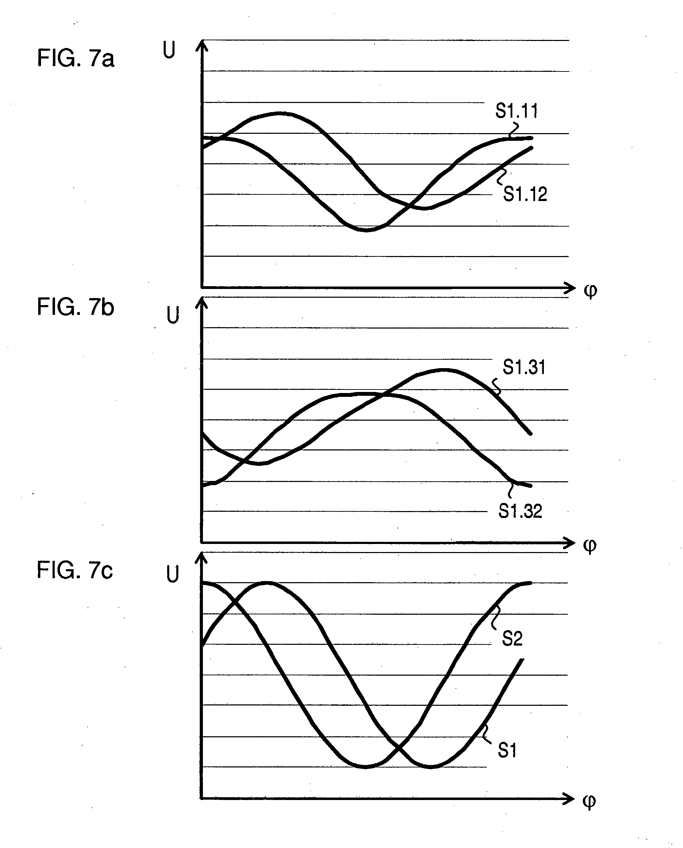

Infolge von Induktionseffekten werden in den Empfängerleiterbahnen 1.11, 1.12; 1.21, 1.22; 1.31, 1.32 Spannungen erzeugt. In den Figuren 7a und 7b sind Verläufe von Signalen S1.11, S1.12; S1.31, S1.32 gezeigt, die durch die Empfängerleiterbahnen 1.11, 1.12, 1.31, 1.32 erzeugt werden, wobei hier der Übersichtlichkeit halber nur die Einhüllenden der empfangenen Spannungen dargestellt sind. In den Figuren 7a, 7b und 7c ist jeweils auf der Abszisse die Winkellage ϕ in einem Bereich von 0° bis 360° aufgetragen und auf der Ordinate der Signalpegel U. Gemäß der Figur 7a erzeugen die Empfängerleiterbahnen 1.11, 1.12 der ersten Empfängerspur 1.1 im Betrieb des Drehwinkelsensors jeweils eine Periodenanzahl n1 = 1 bei der Abtastung der ersten Teilungsspur 2.1 innerhalb einer Umdrehung. Durch die versetzte Anordnung der Empfängerleiterbahnen 1.11, 1.12 entstehen im Betrieb des Drehwinkelsensors zwei induzierte Ausgangssignale, die ideal einen Phasenversatz von 90° zueinander aufweisen. Der jeweilige Verlauf der Signale S1.11, S1.12 weicht real infolge von toleranzbedingten Taumelbewegungen und Schiefstellungen vom idealen Phasenversatz und von einer idealen Sinusform ab. Weiterhin weisen die Signale S1.11, S1.12 einen Offset zueinander auf.

Analog hierzu werden die Signale S1.31, S1.32 der dritten Empfängerspur 1.3 erzeugt, wobei auch hier im Betrieb des Drehwinkelsensors jeweils eine Periodenanzahl n1 = 1 bei der Abtastung der dritten Teilungsspur 2.3 innerhalb einer Umdrehung vorliegt. In den Signalen S1.31, S1.32 sind gemäß der Figur 7b ebenso Abweichungen von einer idealen Sinusform, sowie ein nicht idealer Phasenversatz und ein Offset-Fehler erkennbar.

Der Phasenversatz zwischen zusammengehörigen Empfängerleiterbahnen 1.11, 1.31; 1.12, 1.32 entspricht der Formel 360°/(2·n1), so dass also die Empfängerleiterbahn 1.11 zur Empfängerleiterbahn 1.31 um 180° phasenversetzt angeordnet ist, wie auch die Empfängerleiterbahn 1.12 zur Empfängerleiterbahn 1.32. Die gleiche Betrachtung gilt natürlich gleichfalls für die Teilungsspuren 2.1, 2.3.

Die Signale S1.11, S1.12, S1.31, S1.32 werden sodann miteinander so kombiniert bzw. verschaltet, dass Gesamtsignale S1, S2 gemäß der Figur 7c erhalten werden. Im vorliegenden Fall werden die Signale S1.11, S1.12 S1.31, S1.32 einer Analog-Subtraktion unterworfen. Es werden also in einer analogen Schaltung, die auf der Leiterplatte 1 platziert ist, die Gesamtsignale S1 = S1.11 - S1.31 und S2 = S1.12 - S1.32 gebildet. Dadurch entstehen nahezu ideale Sinusformen für die um 90° phasenversetzten Gesamtsignale S1 und S2.

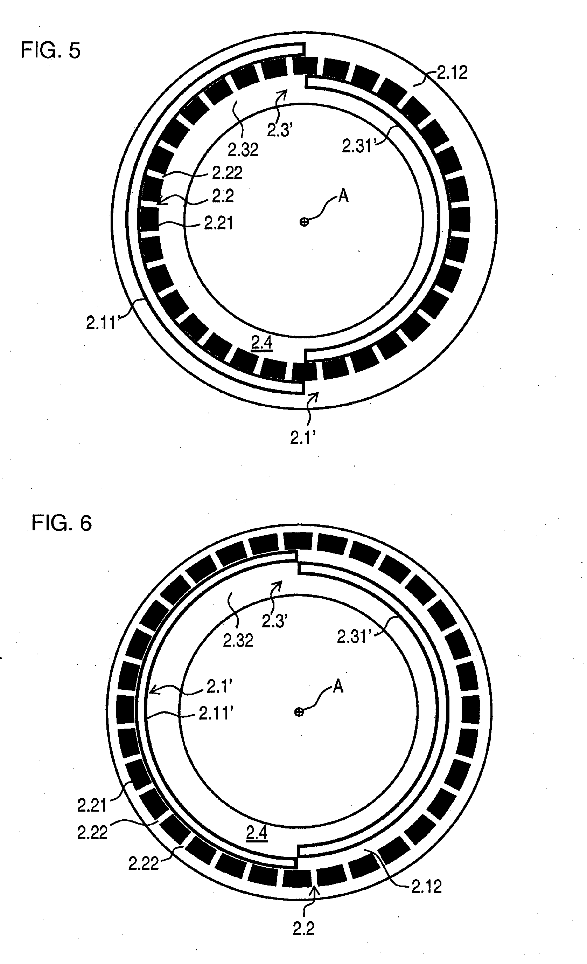

Die Gesamtsignale S1, S2 werden danach mit Hilfe einer Auswerteelektronik in einem Folgeschritt demoduliert. Aus der Abtastung der Teilungsspuren 2.1, 2.3 resultiert also eine relativ grobe, absolute Positionsinformation innerhalb einer Umdrehung der Teilscheibe 2 um die Drehachse A. Die Gesamtsignale S1, S2 liefern ein eindeutiges absolutes Positionssignal innerhalb einer Umdrehung einer Welle 4 (siehe Figur 5), unabhängig von Taumelbewegungen und / oder Schiefstellungen der Teilscheibe 2 oder der Leiterplatte 1. Über die bekannte Auswertung der um 90° phasenversetzten Gesamtsignale S1, S2 ist zudem eine Richtungserkennung bei der Drehbewegung gewährleistet.

Die Empfängerleiterbahnen 1.21, 1.22 der zweiten Empfängerspur 1.2 weisen jeweils zweiunddreißig, also 2⁵, Windungen auf, so dass durch die Empfängerleiterbahnen 1.21, 1.22 Signale S1.21, S1.22 erzeugt werden, die eine geradzahlige Periodenanzahl n2 = 32 aufweisen, so dass ein vergleichsweise hochauflösendes Inkrementalsignal bei der Relativbewegung der Teilscheibe 2 gegenüber der Leiterplatte 1 erzeugt werden kann. Damit eine hochauflösende absolute Drehwinkelbestimmung ermöglicht wird, wird über einen geeigneten Algorithmus eine absolute Winkellage mit der Genauigkeit der zweiten Empfängerspur 1.2 gebildet. In Verbindung mit der groben absoluten Winkellagebestimmung über die erste und dritte Teilungsspur 2.1, 2.3 wird dies erreicht.

Auf Grund der symmetrischen Anordnung der Empfängerleiterbahnen 1.21, 1.22 der zweiten Empfängerspur 1.2 spielen die Taumelbewegungen oder Schiefstellungen bei der Erzeugung der Signale S1.21, S1.22 dieser Empfängerleiterbahnen 1.21, 1.22 kaum eine Rolle, so dass im Hinblick auf die Kompensation der Signale S1.21, S1.22 der Empfängerleiterbahnen 1.21, 1.22 der zweiten Empfängerspur 1.2 keine Maßnahmen vorgesehen sind. Entsprechend kann eine fehlerfreie Anschlussbildung der demodulierten Gesamtsignale S1, S2 mit den demodulierten Signalen S1.21, S1.22 der zweiten Empfängerspur 1.2 erreicht werden.

Die Erfindung ist jedoch nicht auf Drehwinkelsensoren beschränkt, bei denen die Empfängerleiterbahnen 1.11, 1.12; 1.31, 1.32 innerhalb einer Umdrehung nur eine Periodenanzahl n1 = 1 liefern. Vielmehr können erfindungsgemäß die Empfängerleiterbahnen auch so ausgestaltet sein, dass Signale S1.11, S1.12, S1.31, S1.32 größere insbesondere ungeradzahlige Periodenanzahlen innerhalb einer Umdrehung erzeugen, etwa n1 = 3 oder n1 = 5 oder n1 = 7. Weiterhin können alternativ durch die Empfängerleiterbahnen 1.21, 1.22 Signale S1.21, S1.22 erzeugt werden, die eine Periodenanzahl n2 = 16 oder n2 = 64 oder n2 = 128 aufweisen. Die Erfindung ist insbesondere von großem Vorteil, wenn Signale S1.11, S1.12 S1.31, S1.32, die eine niedrige Periodenanzahl n1 aufweisen mit Signalen S1.21, S1.22, die eine hohe Periodenanzahl n2 aufweisen, kombiniert werden.

Im Folgenden werden weitere Ausführungsbeispiele beschrieben, wobei sich diese weiteren Ausführungsbeispiele im Wesentlichen nur durch die Gestaltung der Teilscheibe 2 und der Leiterplatte 1 vom ersten Ausführungsbeispiel unterscheiden.

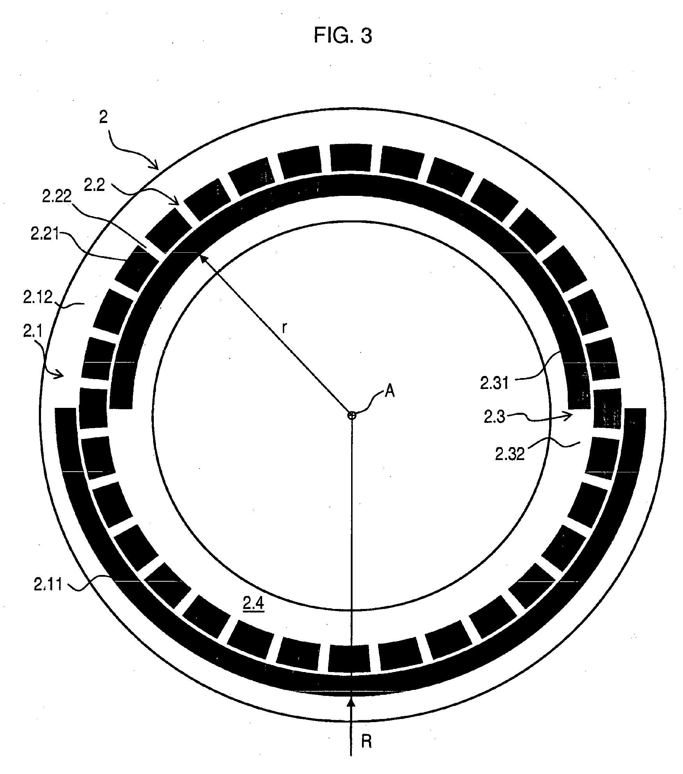

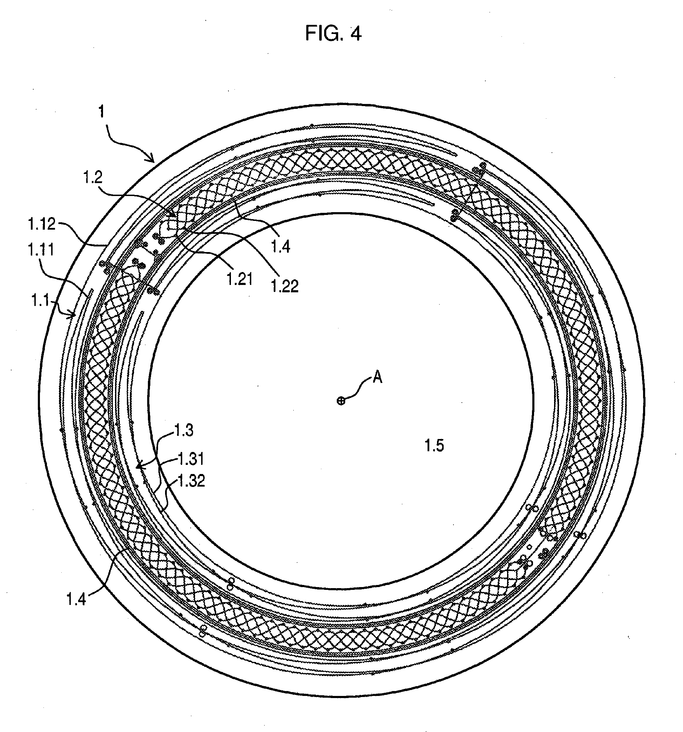

Gemäß einem zweiten Ausführungsbeispiel nach der Figur 3 kann die erste Teilungsspur 2.1 auch radial außerhalb der zweiten Teilungsspur 2.2 angeordnet sein. Entsprechend liegt dann gemäß Figur 4 auch die erste Empfängerspur 1.1 radial außerhalb der zweiten Empfängerspur 1.2, während die dritte Teilungsspur 2.3 und dritte Empfängerspur 1.3 radial ganz innen liegen.

Im dritten und vierten Ausführungsbeispiel, gemäß den Figuren 5 und 6 ist die radiale Anordnung der Teilungsspuren 2.1', 2.2, 2.3' ähnlich wie in den Ausführungsbeispielen eins und zwei. Allerdings sind nunmehr die Teilungsspuren 2.1' und 2.3' so ausgestaltet, dass die elektrisch leitfähigen Teilungsbereiche 2.11', 2.31' nicht vollflächig auf das Substrat 2.4 aufgebracht sind, sondern nur in Form eines umlaufenden leitfähigen Streifens. Diese Ausgestaltung hat insbesondere den Vorteil, dass die in den Teilungsbereichen 2.11', 2.31' erzeugten Wirbelströme überaus richtungsdefiniert fließen. Für die Erzeugung entsprechender Signale haben die Ströme mit radialer Richtungskomponente entscheidenden Einfluss. Durch die streng radial ausgerichteten Streifenbereiche der leitfähigen Teilungsbereiche 2.11', 2.31' fließen zwangsläufig Ströme in dieser Richtung. Die zugehörigen Leiterplatten für das dritte und vierte Ausführungsbeispiel sind in den Figuren nicht dargestellt, weil sich diese im Prinzip nicht von den Leiterplatten 1 des ersten und zweiten Ausführungsbeispiels unterscheiden. Das dritte und das vierte Ausführungsbeispiel zeichnen sich durch eine überaus effiziente Ausgestaltung der Teilungsspuren 2.1', 2.3' bzw. des Drehwinkelsensors aus.

Die geometrische Ausgestaltungen des zweiten und vierten Ausführungsbeispiels haben den Vorteil, dass die erste und die dritte Empfängerspur 1.1, 1.3 einen vergleichsweise großen radialen Abstand aufweisen. Dies hat den Effekt, dass die Reduzierung des negativen Einflusses von Fertigungs- bzw. Anbautoleranzen auf das Messergebnis besonders wirksam erreichbar ist.

Die Figur 8 zeigt einen Drehgeber, der mit dem erfindungsgemäßen induktiven Drehwinkelsensor ausgestattet ist. Der Drehgeber weist ein feststehendes Gehäuse 3 und die relativ zum Gehäuse drehbare Welle 4 auf. Die Welle 4 dient zur Aufnahme eines drehbaren Maschinenteils, beispielsweise einer Motorwelle, dessen Winkellage ϕ bestimmt werden soll. An der Welle 4 ist die Teilscheibe 2 drehfest fixiert. Demgegenüber ist am Gehäuse 3 die Leiterplatte 1 befestigt. Dadurch, dass die ringförmige Teilscheibe 2 die Welle 4 aufnehmen kann, weist die Teilscheibe 2 eine vergleichsweise große innere Bohrung zur Aufnahme der zu messenden Welle 4 auf. Entsprechend haben Taumelbewegungen und / oder Schiefstellungen einen relativ großen Einfluss auf den örtlichen (bezogen auf die Empfängerleiterbahnen 1.11, 1.12; 1.21, 1.22; 1.31, 1.32) Abtastabstand bzw. axialen Luftspalt zwischen der Teilscheibe 2 und der Leiterplatte 1. Mit der Erfindung werden die ungünstigen Auswirkungen auf das Messergebnis infolge der Fertigungs- und Anbautoleranzen signifikant reduziert.

## Patentansprüche

1. Induktiver Drehwinkelsensor, umfassend
e ine Leiterplatte (1), auf der eine Erregerleiterbahn (1.4) und eine erste Empfängerleiterbahn (1.11, 1.12), eine zweite Empfängerleiterbahn (1.21, 1.22) sowie eine dritte Empfängerleiterbahn (1.31, 1.32) aufgebracht sind,
e in Teilungselement (2), welches relativ zur Leiterplatte (1) drehbar ist und eine erste Teilungsspur (2.1) sowie eine zweite Teilungsspur (2.2) umfasst, wobei
die erste und zweite Teilungsspur (2.1, 2.2) und die erste und zweite Empfängerleiterbahn (1.11, 1.12; 1.21, 1.22) so ausgestaltet sind, dass innerhalb einer Umdrehung des Teilungselements (2) relativ zur Leiterplatte (1) durch die erste Empfängerleiterbahn (1.11, 1.12) Signale (S1.11, S1.12) mit einer ersten Periodenanzahl (n1) und durch die zweite Empfängerleiterbahn (1.21, 1.22) Signale (S1.21, S1.22) mit einer zweiten Periodenanzahl (n2) erzeugbar sind, **dadurch gekennzeichnet dass**
das Teilungselement (2) eine dritte Teilungsspur (2.3) aufweist und die dritte Teilungsspur (2.3, 2.3') sowie die dritte Empfängerleiterbahn (1.31, 1.32) so ausgestaltet sind, dass innerhalb einer Umdrehung des Teilungselements (2) relativ zur Leiterplatte (1) durch die dritte Empfängerleiterbahn (1.31, 1.32) Signale (S1.31, S1.32) mit der ersten Periodenanzahl (n1) erzeugbar sind.

2. Induktiver Drehwinkelsensor gemäß dem Anspruch 1, **dadurch gekennzeichnet, dass** der Drehwinkelsensor, insbesondere die Leiterplatte (1), ein Mittel umfasst, durch das die Signale (S1.31, S1.32) der dritten Empfängerleiterbahn (1.31, 1.32) mit den Signalen (S1.11, S1.12) der ersten Empfängerleiterbahn (1.11, 1.12) zu einem Gesamtsignal (S1, S2) kombinierbar sind, aus dem eine relative Winkellage (ϕ) zwischen der Leiterplatte (1) und dem Teilungselement (2) bestimmbar ist.

3. Induktiver Drehwinkelsensor gemäß dem Anspruch 1 oder 2, **dadurch gekennzeichnet, dass** die erste Periodenanzahl (n1) kleiner ist als die zweite Periodenanzahl (n2).

4. Induktiver Drehwinkelsensor gemäß einem der vorhergehenden Ansprüche, **dadurch gekennzeichnet, dass** die erste Periodenanzahl (n1) ungeradzahlig ist und die zweite Periodenanzahl (n2) geradzahlig.

5. Induktiver Drehwinkelsensor gemäß einem der vorhergehenden Ansprüche, **dadurch gekennzeichnet, dass** die erste Periodenanzahl (n1) den Wert eins annimmt.

6. Induktiver Drehwinkelsensor gemäß einem der vorhergehenden Ansprüche, **dadurch gekennzeichnet, dass** die Signale (S1.11, S1.12), die von der ersten Empfängerleiterbahn (1.11, 1.12) erzeugbar sind, gegenüber den Signalen (S1.31, S1.32), die von der dritten Empfängerleiterbahn (1.31, 1.32) erzeugbar sind einen Phasenversatz von
360°/(2·n1)
aufweisen, wobei n1 die erste Periodenanzahl (n1) der Signale (S1.11, S1.12, S1.31, S1.32) der ersten und dritten Empfängerleiterbahn (1.11, 1.12, 1.31, 1.32) darstellt.

7. Induktiver Drehwinkelsensor gemäß einem der vorhergehenden Ansprüche, **dadurch gekennzeichnet, dass** die Leiterplatte (1) eine erste Empfängerspur (1.1), umfassend zwei erste Empfängerleiterbahnen (1.11, 1.12) und eine dritte Empfängerspur (1.3), umfassend zwei dritte Empfängerleiterbahnen (1.31, 1.32) aufweist.

8. Verfahren zum Betrieb eines Drehwinkelsensors, wobei der Drehwinkelsensor
· eine Leiterplatte (1), auf der eine Erregerleiterbahn (1.4) und eine erste Empfängerleiterbahn (1.11, 1.12), eine zweite Empfängerleiterbahn (1.21, 1.22) sowie eine dritte Empfängerleiterbahn (1.31, 1.32) aufgebracht sind, umfasst sowie weiterhin
· ein Teilungselement (2), welches relativ zur Leiterplatte (1) gedreht wird und eine erste Teilungsspur (2.1), eine zweite Teilungsspur (2.2) und eine dritte Teilungsspur (2.3, 2.3') umfasst, wobei
die erste, zweite und dritte Teilungsspur (2.1, 2.2, 2.3, 2.3') und die erste, zweite und dritte Empfängerleiterbahn (1.11, 1.12; 1.21, 1.22, 1.31, 1.32) so ausgestaltet sind, dass innerhalb einer Umdrehung des Teilungselements (2) relativ zur Leiterplatte (1) durch die erste und dritte Empfängerleiterbahn (1.11, 1.12, 1.31, 1.32) Signale (S1.11, S1.12; S1.31, S1.32) mit einer ersten Periodenanzahl (n1) und die zweite Empfängerleiterbahn (1.21, 1.22) Signale (S1.21, S1.22) mit einer zweiten Periodenanzahl (n2) erzeugt werden,
wobei die Signale (S1.11, S1.12, S1.31, S1.32) mit der ersten Periodenanzahl (n1) zu einem Gesamtsignal (S1, S2) kombiniert werden und aus dem Gesamtsignal (S1, S2) eine relative Winkellage (ϕ) zwischen der Leiterplatte (1) und dem Teilungselement (2) bestimmt wird.

9. Verfahren gemäß dem Anspruch 8, wobei die Signale (S1.11, S1.12, S1.31, S1.32) mit der ersten Periodenanzahl (n1) zu einem Gesamtsignal (S1, S2) unter Verwendung einer Additions- oder Subtraktionsoperation kombiniert werden.

10. Verfahren gemäß dem Anspruch 8 oder 9, wobei die erste Periodenanzahl (n1) kleiner ist als die zweite Periodenanzahl (n2).

11. Verfahren gemäß dem Anspruch 8, 9 oder 10, wobei die erste Periodenanzahl (n1) ungeradzahlig ist und die zweite Periodenanzahl (n2) geradzahlig.

12. Verfahren gemäß einem der Ansprüche 8 bis 11, wobei die erste Periodenanzahl (n1) den Wert eins annimmt.

13. Verfahren gemäß einem der Ansprüche 8 bis 12, wobei die kombinierten Signale (S1.11, S1.12, S1.31, S1.32) einen Phasenversatz von
360°/(2·n1)
aufweisen, wobei n1 die erste Periodenanzahl (n1) der Signale (S1.11, S1.12, S1.31, S1.32) der ersten und dritten Empfängerleiterbahn (1.11, 1.12, 1.31, 1.32) darstellt.

14. Verfahren gemäß einem der Ansprüche 8 bis 13, wobei die Leiterplatte (1) eine erste Empfängerspur (1.1), umfassend zwei erste Empfängerleiterbahnen (1.11, 1.12) und eine dritte Empfängerspur (1.3), umfassend zwei dritte Empfängerleiterbahnen (1.31, 1.32) aufweist, so dass zwei Gesamtsignale (S1, S2) erzeugbar sind.

15. Verfahren gemäß dem Anspruch 14, wobei die zwei Gesamtsignale (S1, S2) einen Phasenversatz von 90° aufweisen.

## Claims

1. Inductive rotational angle sensor, comprising
• a printed circuit board (1) on which there are mounted an excitation conductor track (1.4) and a first receiver conductor track (1.11, 1.12), a second receiver conductor track (1.21, 1.22) and a third receiver conductor track (1.31, 1.32),
• a graduation element (2) which can be rotated relative to the printed circuit board (1) and comprises a first graduation track (2.1) and a second graduation track (2.2),
the first and second graduation tracks (2.1, 2.2) and the first and second receiver conductor tracks (1.11, 1.12; 1.21, 1.22) are configured such that, within a rotation of the graduation element (2) relative to the printed circuit board (1), signals (S1.11, S1.12) with a first period number (n1) can be produced by the first receiver conductor track (1.11, 1.12) and signals (S1.21, S1.22) with a second period number (n2) can be produced by the second receiver conductor track (1.21, 1.22), **characterized in that**
the graduation element (2) has a third graduation track (2.3) and the third graduation track (2.3, 2.3') as well as the third receiver conductor track (1.31, 1.32) are configured such that, within a rotation of the graduation element (2) relative to the printed circuit board (1), signals (S1.31, S1.32) with the first period number (n1) can be produced by the third receiver conductor track (1.31, 1.32).

2. Inductive rotational angle sensor according to Claim 1, **characterized in that** the rotational angle sensor, in particular the printed circuit board (1), includes a means which can be used to combine the signals (S1.31, S1.32) of the third receiver conductor track (1.31, 1.32) with the signals (S1.11, S1.12) of the first receiver conductor track (1.11, 1.12) to form a total signal (S1, S2) from which it is possible to determine a relative angular position (ϕ) between the printed circuit board (1) and the graduation element (2).

3. Inductive rotational angle sensor according to either of Claims 1 and 2, **characterized in that** the first period number (n1) is smaller than the second period number (n2).

4. Inductive rotational angle sensor according to one of the preceding claims, **characterized in that** the first period number (n1) is odd and the second period number (n2) is even.

5. Inductive rotational angle sensor according to one of the preceding claims, **characterized in that** the first period number (n1) assumes the value one.

6. Inductive rotational angle sensor according to one of the preceding claims, **characterized in that** by comparison with the signals (S1.31, S1.32) which can be produced by the third receiver conductor track (1.31, 1.32), the signals (S1.11, S1.12) which can be produced by the first receiver conductor track (1.11, 1.12) have a phase shift of
360°/(2·n1),
n1 representing the first period number (n1) of the signals (S1.11, S1.12, S1.31, S1.32) of the first and third receiver conductor tracks (1.11, 1.12, 1.31, 1.32).

7. Inductive rotational angle sensor according to one of the preceding claims, **characterized in that** the printed circuit board (1) has a first receiver track (1.1), comprising two first receiver conductor tracks (1.11, 1.12), and a third receiver track (1.3) comprising two third receiver conductor tracks (1.31, 1.32).

8. Method for operating a rotational angle sensor, the rotational angle sensor comprising
• a printed circuit board (1) on which there are mounted an excitation conductor track (1.4) and a first receiver conductor track (1.11, 1.12), a second receiver conductor track (1.21, 1.22) and a third receiver conductor track (1.31, 1.32), and further
• comprises a graduation element (2), which is rotated relative to the printed circuit board (1), and a first graduation track (2.1), a second graduation track (2.2) and a third graduation track (2.3, 2.3'), in which
the first, second and third graduation tracks (2.1, 2.2, 2.3, 2.3') and the first, second and third receiver conductor tracks (1.11, 1.12; 1.21, 1.22, 1.31, 1.32) are configured such that, within a rotation of the graduation element (2) relative to the printed circuit board (1), signals (S1.11, S1.12; S1.31, S1.32) with a first period number (n1) are produced by the first and third receiver conductor tracks (1.11, 1.12, 1.31, 1.32) and signals (S1.21, S1.22) with a second period number (n2) are produced by the second receiver conductor track (1.21, 1.22),
the signals (S1.11, S1.12, S1.31, S1.32) with the first period number (n1) being combined to form a total signal (S1, S2), and a relative angular position (ϕ) between the printed circuit board (1) and the graduation element (2) is determined from the total signal (S1, S2).

9. Method according to Claim 8, in which the signals (S1.11, S1.12, S1.31, S1.32) with the first period number (n1) are combined to form a total signal (S1, S2) by employing an addition or subtraction operation.

10. Method according to either of Claims 8 and 9, in which the first period number (n1) is smaller than the second period number (n2).

11. Method according to Claim 8, 9 or 10, in which the first period number (n1) is odd and the second period number (n2) is even.

12. Method according to one of Claims 8 to 11, in which the first period number (n1) assumes the value one.

13. Method according to one of Claims 8 to 12, in which the combined signals (S1.11, S1.12, S1.31, S1.32) have a phase shift of
360°/(2·n1),
n1 representing the first period number (n1) of the signals (S1.11, Sl.12, S1.31, S1.32) of the first and third receiver conductor tracks (1.11, 1.12, 1.31, 1.32).

14. Method according to one of Claims 8 to 13, in which the printed circuit board (1) has a first receiver track (1.1) comprising two first receiver conductor tracks (1.11, 1.12) and a third receiver track (1.3), comprising two third receiver conductor tracks (1.31, 1.32) so that it is possible to produce two total signals (S1, S2).

15. Method according to Claim 14, in which the two total signals (S1, S2) have a phase shift of 90°.

## Revendications

1. Capteur inductif d'angle de rotation, comportant :
une carte de circuit (1) sur laquelle sont placées une piste conductrice d'excitation (1.4) et une première piste conductrice de réception (1.11, 1.12), une deuxième piste conductrice de réception (1.21, 1.22) ainsi qu'une troisième piste conductrice de réception (1.31, 1.32),
un élément diviseur (2) apte à tourner par rapport à la carte de circuit (1) et comportant une première piste de division (2.1) ainsi qu'une deuxième piste de division (2.2),
la première et la deuxième piste de division (2.1, 2.2) ainsi que la première et la deuxième piste conductrice de réception (1.11, 1.12; 1.21, 1.22) étant configurées de telle sorte qu'à l'intérieur d'un tour de l'élément de division (2) par rapport à la carte de circuit (1), des signaux (S1.11, S1.12) présentant un premier nombre (n1) de périodes peuvent être formés par la première piste conductrice de réception (1.11, 1.12) et des signaux (S1.21, S1.22) présentant un deuxième nombre (n2) de périodes peuvent être formés par la deuxième piste conductrice de réception (1.21, 1.22), **caractérisé en ce que**
l'élément de division (2) présente une troisième piste de division (2.3) et la troisième piste de division (2.3, 2.3') ainsi que la troisième piste conductrice de réception (1.31, 1.32) sont configurées de telle sorte qu'à l'intérieur d'un tour de l'élément de division (2) par rapport à la carte de circuit (1), des signaux (S1.31, S1.32) qui présentent le premier nombre (n1) de périodes peuvent être formés par la troisième piste conductrice de réception (1.31, 1.32).

2. Capteur inductif d'angle de rotation selon la revendication 1, **caractérisé en ce que** le capteur d'angle de rotation et en particulier la carte de circuit (1) comportent un moyen par lequel les signaux (S1.31, S1.32) de la troisième piste conductrice de réception (1.31, 1.32) peuvent être combinés avec les signaux (S1.11, S1.12) de la première piste conductrice de réception (1.11, 1.12) pour former un signal global (S1, S2) à partir duquel une position angulaire relative (ϕ) entre la carte de circuit (1) et l'élément de division (2) peut être déterminée.

3. Capteur inductif d'angle de rotation selon les revendications 1 ou 2, **caractérisé en ce que** le premier nombre (n1) de périodes est plus petit que le deuxième nombre (n2) de périodes.

4. Capteur inductif d'angle de rotation selon l'une des revendications précédentes, **caractérisé en ce que** le premier nombre (n1) de périodes est impair et le deuxième nombre (n2) de périodes est pair.

5. Capteur inductif d'angle de rotation selon l'une des revendications précédentes, **caractérisé en ce que** le premier nombre (n1) de périodes prend la valeur un.

6. Capteur inductif d'angle de rotation selon l'une des revendications précédentes, **caractérisé en ce que** les signaux (S1.11, S1.12) qui peuvent être formés par la première piste conductrice de réception (1.11, 1.12) présentent par rapport aux signaux (S1.31, S1.32) qui peuvent être formés par la troisième piste conductrice de réception (1.31, 1.32) un déphasage de 360°/(2·n1), n1 représentant le premier nombre (n1) de périodes des signaux (S1.11, S1.12, S1.31, S1.32) de la première et de la troisième piste conductrice de réception (1.11, 1.12, 1.31, 1.32).

7. Capteur inductif d'angle de rotation selon l'une des revendications précédentes, **caractérisé en ce que** la carte de circuit (1) présente une première piste de réception (1.1) qui comprend deux premières pistes conductrices de réception (1.11, 1.12) et une troisième piste de réception (1.3) qui comprend deux troisièmes pistes conductrice de réception (1.31, 1.32).

8. Procédé de conduite d'un capteur d'angle de rotation, le capteur d'angle de rotation présentant :
une carte de circuit (1) sur laquelle sont placées une piste conductrice d'excitation (1.4) et une première piste conductrice de réception (1.11, 1.12), une deuxième piste conductrice de réception (1.21, 1.22) ainsi qu'une troisième piste conductrice de réception (1.31, 1.32),
un élément diviseur (2) apte à tourner par rapport à la carte de circuit (1) et comportant une première piste de division (2.1), une deuxième piste de division (2.2) et une troisième piste de division (2.3, 2.3'),
la première, la deuxième et la troisième piste de division (2.1, 2.2, 2.3, 2.3') ainsi que la première, la deuxième et la troisième piste conductrice de réception (1.11, 1.12; 1.21, 1.22, 1.31, 1.32) étant configurées de telle sorte qu'à l'intérieur d'un tour de l'élément de division (2) par rapport à la carte de circuit (1), des signaux (S1.11, S1.12; S1.31, S1.32) présentant un premier nombre (n1) de périodes peuvent être formés par la première et la troisième piste conductrice de réception (1.11, 1.12, 1.31, 1.32) et des signaux (S1.21, S1.22) présentant un deuxième nombre (n2) de périodes peuvent être formés par la deuxième piste conductrice de réception (1.21, 1.22),
les signaux (S1.11, S1.12, S1.31, S1.32) présentant le premier nombre (n1) de périodes pouvant être combinés en un signal global (S1, S2), la position angulaire relative (ϕ) entre la carte de circuit (1) et l'élément de division (2) étant déterminée à partir du signal global (S1, S2).

9. Procédé selon la revendication 8, dans lequel les signaux (S1.11, S1.12, S1.31, S1.32) qui présentent le premier nombre (n1) de périodes sont combinés en un signal global (S1, S2) par recours à une opération d'addition ou de soustraction.

10. Procédé selon les revendications 8 ou 9, dans lequel le premier nombre (n1) de périodes est plus petit que le deuxième nombre (n2) de périodes.

11. Procédé selon les revendications 8, 9 ou 10, dans lequel le premier nombre (n1) de périodes est impair et le deuxième nombre (n2) de périodes est pair.

12. Procédé selon l'une des revendications 8 à 11, dans lequel le premier nombre (n1) de périodes prend la valeur un.

13. Procédé selon l'une des revendications 8 à 12, dans lequel les signaux combinés (S1.11, S1.12, S1.31, S1.32) présentent un déphasage un déphasage de 360°/(2·n1), n1 représentant le premier nombre (n1) de périodes des signaux (S1.11, S1.12, S1.31, S1.32) de la première et de la troisième piste conductrice de réception (1.11, 1.12, 1.31, 1.32).

14. Procédé selon l'une des revendications 8 à 13, dans lequel la carte de circuit (1) présente une première piste de réception (1.1) qui comprend deux premières pistes conductrices de réception (1.11, 1.12) et une troisième piste de réception (1.3) qui comprend deux troisièmes pistes conductrice de réception (1.31, 1.32), de telle sorte que deux signaux globaux (S1, S2) peuvent être formés.

15. Procédé selon la revendication 14, dans lequel les deux signaux globaux (S1, S2) présentent un déphasage de 90°.
